# EUROPEAN PATENT APPLICATION

(11) **EP 1 734 643 A2**
(43) Date of publication of application: **20.12.2006**
(21) Application number: 06012164.7
(22) Date of filing: 13.06.2006
(51) Int. Cl.: H02K 16/02, H02K 1/16, H02K 3/12

(54) **Induction motor**

(30) Priority: 15.06.2005 KR 2005051587
(71) Applicant: LG Electronics Inc., Yongdungpo-Gu Seoul (KR)
(72) Inventor: Han, Seung-Do, Incheon (KR); Shin, Hyoun-Jeong, Incheon (KR); Ahn, Jae-Hong, Anyang Gyeonggi-Do (KR); Oh, Seung-Suk, Gwangmyeong Gyeonggi-Do (KR)
(74) Representative: Vossius & Partner

(57) **Abstract**

An induction motor comprising a stator including main winding coils and sub winding coils wound in a stator core, respectively, the main winding coil having a volume greater than that of the sub winding coil, a primary rotor rotatably inserted in the stator, and a secondary rotor rotatably inserted in an air gap between the stator and the primary rotor, whereby counter electromotive force of the main winding coils is increased and resistance thereof is decreased, and thus an operation efficiency can be improved and starting voltage and break down voltage can be reduced.

## Description

The present invention relates to an induction motor, and particularly, to an induction motor capable of decreasing an inefficient part of a winding coil, and minimizing resistance loss of the winding coil and increasing a counter electromotive force by efficiently winding the winding coil.

In general, motors which convert electrical force into kinetic force are applied to various fields such as home appliances to be used as a power source for the products. For example, in case of a refrigerator, the motor rotates a fan to circulate cool air inside the refrigerator. In case of an air conditioner, the motor rotates the fan to move the cool air generated from an evaporator into indoor spaces.

The refrigerator or the air conditioner continues to be turned on and off in order to maintain an inside temperature of the refrigerant or an indoor temperature as a preset temperature. Accordingly, the motor mounted in the refrigerator or the air conditioner requires a high efficiency in order to minimize a power consumption thereof. Various researches for increasing the efficiency of the motor have been ongoing.

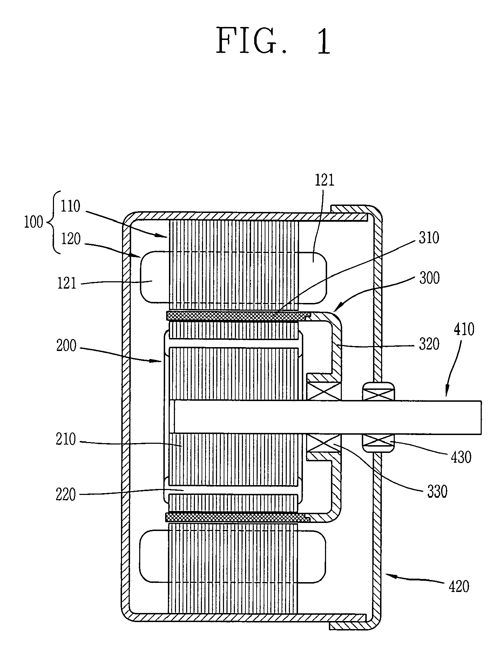

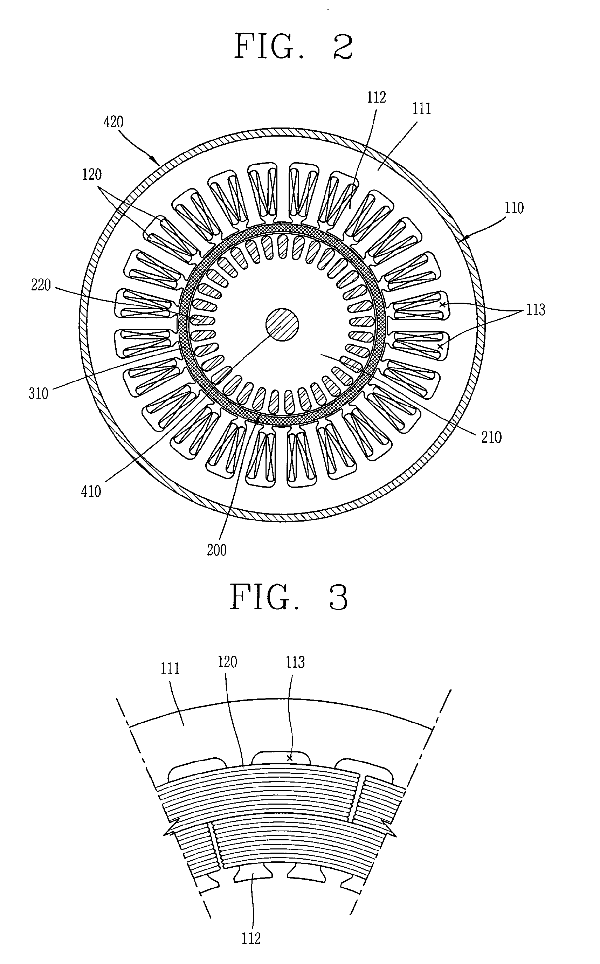

Fig. 1 is a front sectional view illustrating one example of an induction motor which is being manufactured by the present applicant who has carried out research and development for the motor, and Fig. 2 is a side sectional view of the induction motor.

As illustrated in the drawings, the induction motor preferably includes a stator 100 in which a coil is wound in a circumferential direction thereof, a primary rotor 200 rotatably inserted into the stator 100, and a secondary rotor 300 rotatably inserted between the stator 100 and the primary rotor 200.

The stator 100 includes a stator core 110 having a particular length, and winding coils 120 wound in the stator core 110 in a circumferential direction thereof. The stator core 110 includes a yoke portion 111 formed in an annular shape having a particular width, and a plurality of teeths 112 formed at an inner circumferential surface of the yoke portion 111 and extending to have a particular length. Each teeth 112 has the same shape as one another. Slots 113 having the same size and shape are formed between each teeth 112. End surfaces of the teeths 112 form an insertion hole such that the primary rotor 200 is located in the stator core 110.

The stator core 110 is a lamination body in which a plurality of sheets are laminated.

The winding coils 120 are obtained by winding coils between each teeth 112 plural times to wrap around the plurality of teeths 112. The winding coils 120 are positioned in the slots 113 formed between each teeth 112. That is, the winding coils 120, as illustrated in Fig. 3, are positioned in a circumferential direction of the stator core 110 in which the plurality of teeths 112 are arranged, and also protrude toward both lateral surfaces of the stator core 110. The winding coils 120 include sub winding coils for rotating the secondary rotor 300 by a current applied at a time of an initial operation, and main winding coils for generating a counter electromotive force at a time of a normal operation.

The primary rotor 200 includes a rotor core 210 formed in a hollow cylindrical shape with a particular length, and cages 220 inserted into the rotor core 210. The rotor core 210 is a lamination body in which a plurality of sheets are laminated. A rotation shaft 410 is coupled to the center of the rotor core 210.

The primary rotor 200 is inserted into the insertion hole of the stator 100.

The secondary rotor 300 includes a magnet 310 having a cylindrical shape with a certain thickness and a holder 320 having a cup shape and supporting the magnet 310. The magnet 310 is rotatably inserted between an inner circumferential surface of the insertion hole of the stator 100 and an outer circumferential surface of the primary rotor 200. A bearing 330 is coupled to one side of the holder 320 and the bearing 330 is coupled to the rotation shaft 410.

The stator 100 is mounted in a motor casing 420. A bearing 430 is coupled to one side of the motor casing 420 and the rotation shaft 410 is coupled to the bearing 430. The stator 100 is coupled such that its outer circumferential surface comes in contact with an inner circumferential surface of the motor casing 420.

The operation of the above-described induction motor will be described as follows.

When a first electric current is sequentially supplied to the winding coil 120 of the stator 100 and a rotating magnetic field is formed, the secondary rotor 300 is synchronized by the rotating magnetic field and therefore rotated at synchronous speed. Since the secondary rotor 300 is a magnet, the rotating magnetic field having an intensive magnetic field is generated by the rotation of the secondary rotor 300. By the rotating magnetic field of the secondary rotor 300, the primary rotor 200 is rotated.

When the primary rotor 200 is rotated, a rotary force of the primary rotor 200 is transferred to a part requiring for the rotary force through the rotation shaft 410.

However, the winding coil 120 of the stator 100 has a part from which the effective magnetic field is not generated during the operation of the induction motor, and thus efficiency of the induction motor is deteriorated.

That is, in the winding coil 120 of the stator 100, parts positioned at both sides of the stator core 110 are end turn portions 121 which do not cross each teeth 112. As a result, the rotating magnetic field affecting the primary rotor 200 can not be generated therefrom. Furthermore, copper loss which is the self-resistance of the end turn portions 121, is increased to thereby lower efficiency and power.

Though the end turn portion 121 varies its length according to a winding method, the end turn portion 121 exists of necessity in the existing winding method. That is, a plurality of poles should be formed in the stator 100 in order to generate the rotating magnetic field in the winding coil 120. For this, the winding coils 120, as shown in Figure 3, are not wound around the adjacent teeths 112 but are wound by skipping the several teeths 112. Therefore, the end turn portion 121 inevitably increases in length.

Therefore, an object of the present invention is to provide an induction motor capable of reducing inefficient parts of winding coils, minimizing resistance loss of the winding coil and increasing a counter electromotive force by efficiently winding the winding coil.

To achieve these and other advantages and in accordance with the purpose of the present invention, as embodied and broadly described herein, there is provided an induction motor comprising: a stator having main winding coils and sub winding coils wound in a stator core, the main winding coil having a volume greater than that of the sub winding coil, a primary rotor rotatably inserted into the stator, and a secondary rotor rotatably inserted into an air gap between the stator and the primary rotor.

The foregoing and other objects, features, aspects and advantages of the present invention will become more apparent from the following detailed description of, the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Figs. 1 and 2 are front and lateral sectional views illustrating an induction motor which is being manufactured by the present applicant who has carried out research and development for the motor;
Fig. 3 is a lateral sectional view illustrating a part of the induction motor;
Figs. 4 and 5 are front and lateral sectional views illustrating an embodiment of an induction motor according to the present invention;
Fig. 6 is a lateral sectional view illustrating a part of a stator core constructing the induction motor according to the present invention;
Figs. 7 and 8 are sectional views respectively illustrating a winding structure of winding coils constructing the induction motor according to the present invention;
Fig. 9 is a sectional view illustrating another varied embodiment of a secondary rotor constructing the induction motor according to the present invention;
Fig. 10 is a lateral sectional view illustrating magnetic saturation states of the induction motor according to the related art;
Fig. 11 is a lateral sectional view illustrating magnetic saturation states of the induction motor according to the present invention;
Fig. 12 is a lateral sectional view illustrating magnetic characteristics of the induction motor according to the related art;
Fig. 13 is a lateral sectional view illustrating magnetic characteristics of the induction motor according to the present invention;
Figs. 14 is a graph illustrating counter electromotive force characteristics of the induction motor; and
Fig. 15 is a graph illustrating counter electromotive force characteristics of the induction motor according to the present invention.

Reference will now be made in detail to the preferred embodiments of the present invention, examples of which are illustrated in the accompanying drawings.

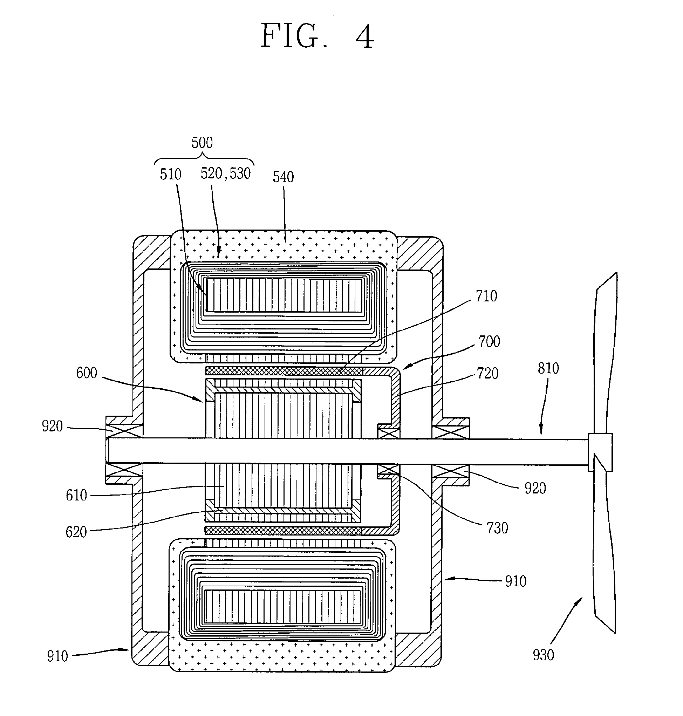

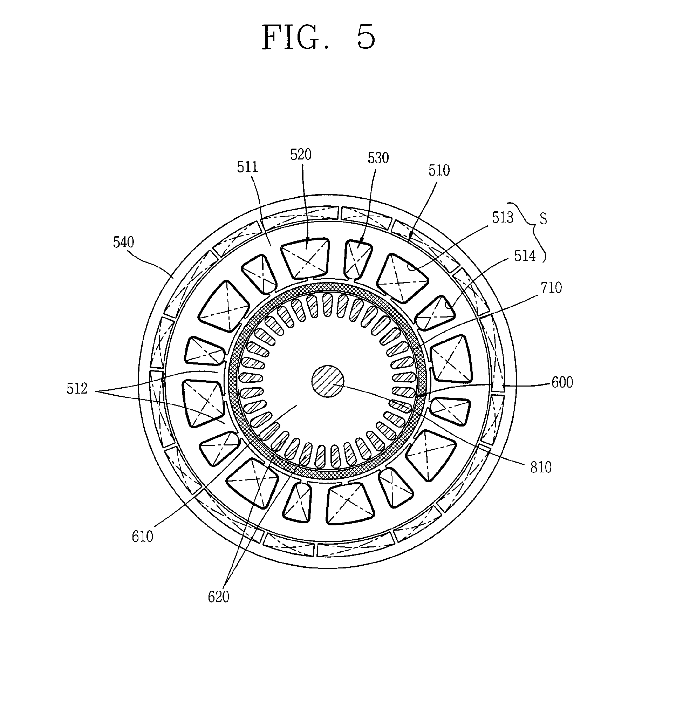

Fig. 4 is a front sectional view illustrating an embodiment of an induction motor according to the present invention, and Fig. 5 is a lateral sectional view of the induction motor.

As illustrated in the drawings, first, the induction motor is provided with a stator including a stator core 510, main winding coils 520 wound on the stator core 510, and sub winding coils 530 wound on the stator core, the sub winding coil 530 having a volume smaller than that of the main winding coil 520, a primary rotor 600 rotatably inserted into the stator 500, and a secondary rotor 700 including a magnet 710 and rotatably inserted into an air gap between the stator 500 and the primary rotor 600.

The stator core 510 includes a yoke portion 511 formed in an annular shape with a particular width and a plurality of teeths 512 formed at an inner circumferential surface of the yoke portion 511 with a particular length and extending toward the center of the yoke portion 511. Slots S are formed between the teeths 512, each of which preferably has the same shape.

The slots S include main slots 513 in which the main winding coils 520 are positioned and sub slots 514 in which the sub winding coils 530 are positioned. The size of the main slot 513 is greater than that of the sub slot 514. The main slots 513 and the sub slots 514 are alternately arranged with each other.

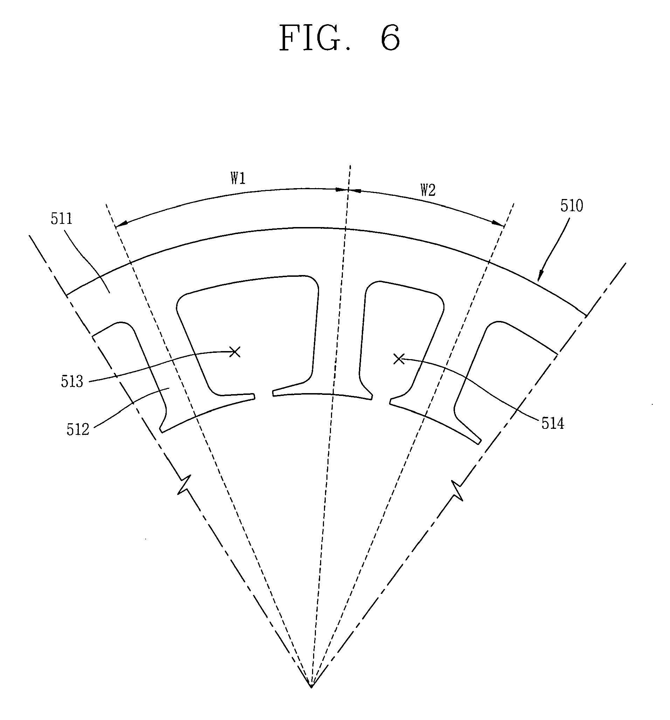

The main slot 513 preferably has the size 1.3 through 2 times as great as that of the sub slot 514. That is, as illustrated in Fig. 6, an angle formed by virtual lines which extend from the center of the stator core 510 and pass through the centers of the two teeths 512 forming the main slot 513, respectively, preferably has a size W1 which corresponds to 1.3 through 2 times as great as a size W2 of an angle formed by virtual lines which extend from the stator core 510 to thus pass through the centers of the two teeths 512 forming the sub slot 514, respectively.

Inner walls of the slots S, namely, an inner circumferential surface of the yoke portion 511 has a curved surface. The radius of curvature of the inner circumferential surface of the yoke portion 511 is the same as that of the outer circumferential surface thereof.

The stator core 510 is a lamination body in which a plurality of sheets are laminated.

The main winding coils 520 are wound so as to be positioned in the main slots 513 of the stator core 510, while the sub winding coils 530 are wound so as to be positioned in the sub slots 514 of the stator core 510. Accordingly, the main winding coil 520 and the sub winding coil 530 are alternately positioned with each other.

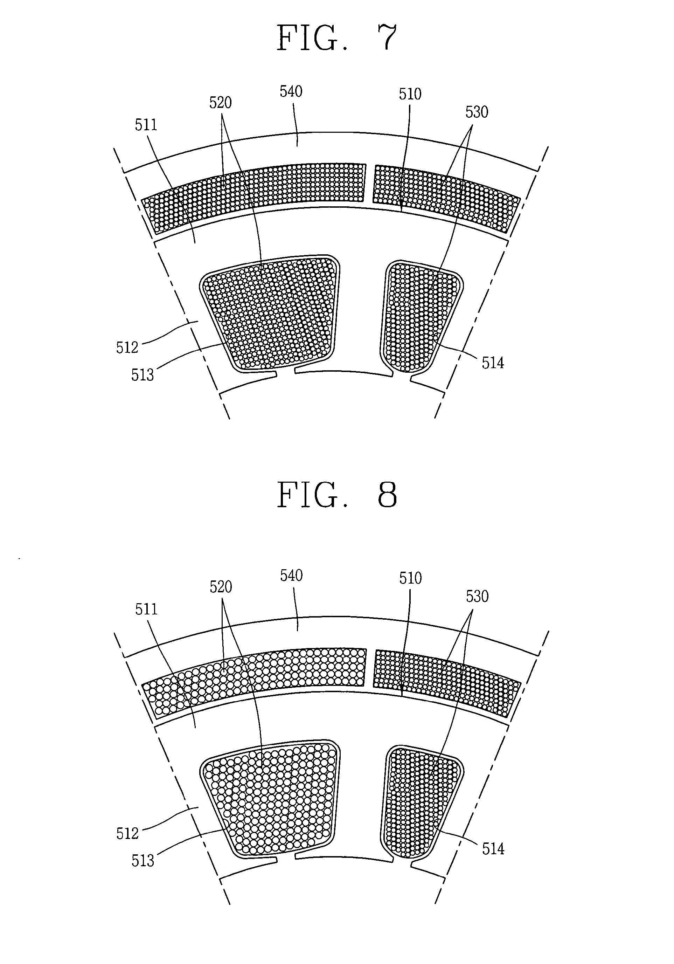

As one of methods for allowing the main winding coil 520 to have a volume greater than that of the sub winding coil 530, as illustrated in Fig. 7, the number of turns of winding of the main winding coil 520 is greater than that of the sub winding coil 530, and accordingly the main winding coil 520 can have the volume greater than that of the sub winding coil 530. Here, the diameter of the coil forming the main winding coil 520 is the same as that of the coil forming the sub winding coil 530.

The main slot 513 of the stator core 510 in which the main winding coil 520 is positioned has a size greater than that of the sub slot 514 of the stator core 510 in which the sub winding coil 530 is positioned, so as to enable an increase in the number of turns of winding of the main winding coil 520.

Another method for allowing the main winding coil 520 to have a volume greater than that of the sub winding coil 530, as illustrated in Fig. 8, the number of turns of winding of the main winding coil 520 matches that of the sub winding coil 530. Also, the coil diameter of the main winding coil 520 is allowed to be greater than that of the sub winding coil 530. Even if the number of turns of winding of both the main and sub winding coils 520 and 530 are the same as each other, because the coil diameter of the main winding coil 520 is greater than that of the sub winding coil 530, the volume of the main winding coil 520 can be greater than that of the sub winding coil 530.

An insertion hole is formed by end surfaces of the teeths 512 of the stator core 510 such that the primary rotor 600 can be positioned in the stator core 510 thereby.

The primary rotor 600 includes a rotor core 610 having a particular length and a cage 620 inserted into the rotor core 610. The rotor core 610 is a lamination body in which a plurality of sheets are laminated. A rotation shaft 810 is coupled to the center of the rotor core 610.

The primary rotor 600 is inserted into the insertion hole of the stator 500.

The secondary rotor 700 includes a magnet 710 formed in a hollow cylindrical shape with a particular thickness and a holder 720 formed in a cup-like shape and supporting the magnet 710. The magnet 710 is magnetized to thus have a plurality of poles in a circumferential direction thereof.

The magnet 710 is rotatably inserted between an inner circumferential surface of the insertion hole of the stator 500 and an outer circumferential surface of the primary rotor 600. A bearing 730 is coupled to one side of the holder 720. The bearing 730 is coupled to the rotation shaft 810.

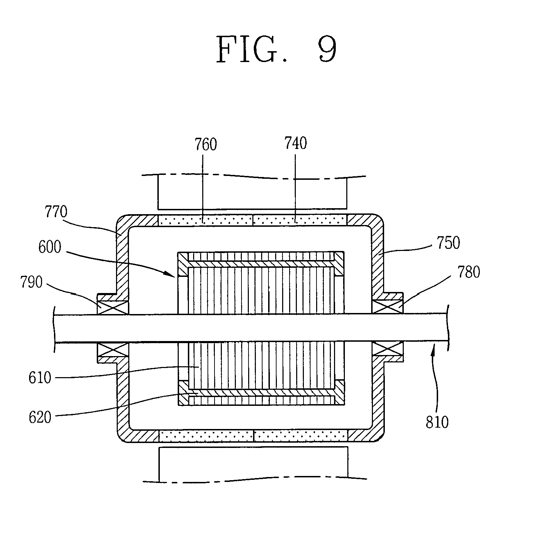

In another varied embodiment, as illustrated in Fig. 9, the secondary rotor 700 includes two magnets 740 and 760 formed in a hollow cylindrical shape, respectively, with particular thickness, length and outer diameter, and two holders 750 and 770 formed in a cup-like shape, respectively, and supporting the two hollow cylindrical magnets 740 and 760, respectively. The hollow cylindrical magnets 740 and 760 are magnetized to thus have a plurality of poles in a circumferential direction thereof.

One hollow cylindrical magnet 740 is rotatably inserted between the inner circumferential surface of the insertion hole of the stator 500 and the outer circumferential surface of the primary rotor 600 at one side of the stator 500, while the other hollow cylindrical magnet 760 is rotatably inserted between the inner circumferential surface of the insertion hole of the stator 500 and the outer circumferential surface of the primary rotor 600 at the other side of the stator 500.

Bearings 780 and 790 are coupled, respectively, to each one side of the holders 750 and 770 which are coupled to the two hollow cylindrical magnets 740 and 760, respectively. Each bearing 780 and 790 coupled to each holder 750 and 770 is coupled to the rotation shaft 810.

A protecting member 540 covers over edges of the main winding coils 520, the sub winding coils 530 and the stator core 510. The protecting member 540 may preferably be formed by being molded.

A motor casing 910 is provided at an outer side of the stator 500. The rotation shaft 810 of the primary rotor 600 is coupled to bearings 920, which are coupled to both lateral walls of the motor casing 910, respectively.

A fan 930 is fixedly coupled to the rotation shaft 810 supported by the motor casing 910. The fan 930 may preferably be an air conditioner fan by which air flows within the air conditioner.

The induction motor according to the present invention can be provided with the air conditioner fan and thus be mounted within the air conditioner.

Hereinafter, an operation effect of the induction motor according to the present invention will now be explained.

In the induction motor, first, upon supplying an alternate current (AC) power, which is commonly used power, to the main winding coils 520 and the sub winding coils 530 of the stator 500, a rotating magnetic field is formed in an elliptical form at the stator core 510 by a current flowing over the sub winding coils 530. The secondary rotor 700 is synchronized by the rotating magnetic field to thus be rotated at synchronous speed. The magnet 710 of the secondary rotor 700 generates a rotating magnetic field having an intensive magnetic field by the rotation of the secondary rotor 700. The primary rotor 600 is then rotated by the rotating magnetic field of the secondary rotor 700.

The primary rotor 600 rotated by the rotating magnetic field of the secondary rotor 700 during the operation of the motor can be rotated by the rotating magnetic field of the main winding coils 520 after the synchronous speed comes.

That is, the current flowing over the sub winding coils 530 allows the secondary rotor 700 to be initially driven. The primary rotor 600 is then rotated by the rotation of the secondary rotor 700. Also, the current flowing over the main winding coils 520 corresponds to a counter electromotive force of the primary rotor 600, and thus generates power.

In the present invention, the main winding coils 520 used in the operation of the induction motor are allowed to have a great volume, respectively, and the sub winding coils 530 which are not used in the operation of the motor except the time of the initial driving thereof are allowed to have a small volume, respectively. Accordingly, the counter electromotive force induced to the main winding coils 520 which generate the power of the motor while driving the motor can be increased. In addition, resistance of the main winding coils 520 can be decreased.

Furthermore, in the present invention, the main winding coils 520 and the sub winding coils 530 have different volumes from each other, and also the main winding coils 520 and the sub winding coils 530 are wound to cover the inner walls of the slots of the stator core 510 and the outer circumferential surface of the stator core 510. Accordingly, the counter electromotive force induced to the main winding coils 520 can be increased, and the inefficient part such as the end turn portion of the winding coil of the related art can be eliminated, so as to decrease copper loss which is the self-resistance of the coil.

In the present invention, in addition, the main winding coils 520 and the sub winding coils 530 have different volumes from each other, and also the secondary rotor 700 is provided with the two hollow cylindrical magnets 750 and 760. Accordingly, the counter electromotive force induced to the main winding coils 520 can be increased, and simultaneously the rotation speed of the primary rotor 600 can be changed. A magnetic flux of the primary rotor 600 is changed according to changes in voltage, to thus enable a varying of the rotation speed. Furthermore, when the secondary rotor 700 is provided with the two hollow cylindrical magnets 740 and 760, during the initial driving of the motor and normal operation thereof, the two hollow cylindrical magnets 740 and 760 can alternately be synchronized, thereby decreasing a starting current.

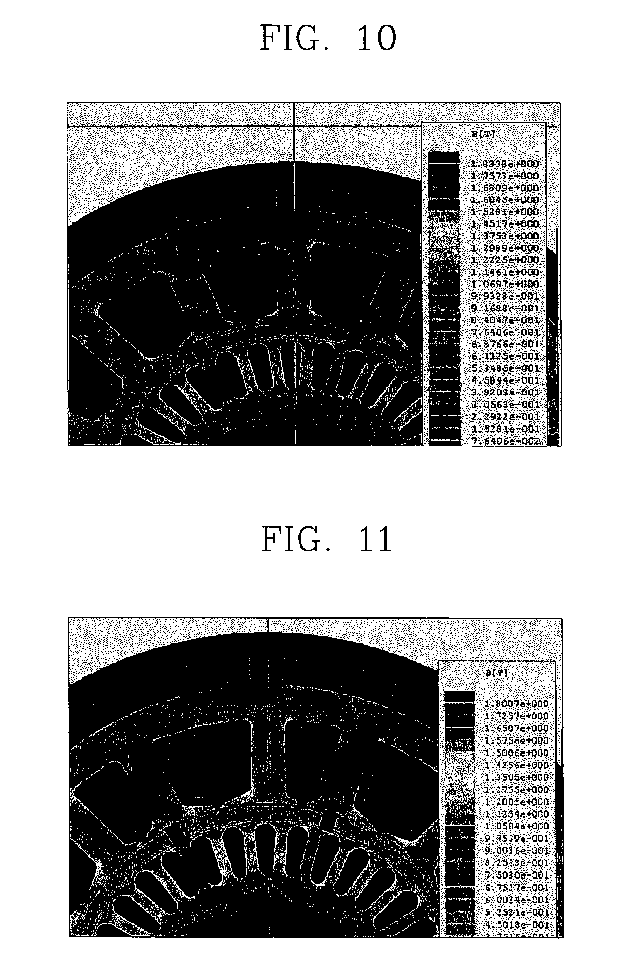

Fig. 10, on the other hand, illustrates a magnetic saturation state in a state in which the main slot 513 and the sub slot 514 of the stator core 510 have the same size as each other and the volume of the main winding coil 520 wound in the main slot 513 is the same as that of the sub winding coil 530 wound in the sub slot 514. Fig. 11 illustrates a magnetic saturation state in a state in which the main slot 513 and the sub slot 514 of the stator core 510 have different sizes from each other and the volume of the main winding coil 520 positioned in the main slot 513 is greater than that of the sub winding coil 530 positioned in the sub slot 514.

As illustrated in the drawings, when the volume of the main winding coil 520 is greater than that of the sub winding coil 530, the magnetic saturation zone is not generated.

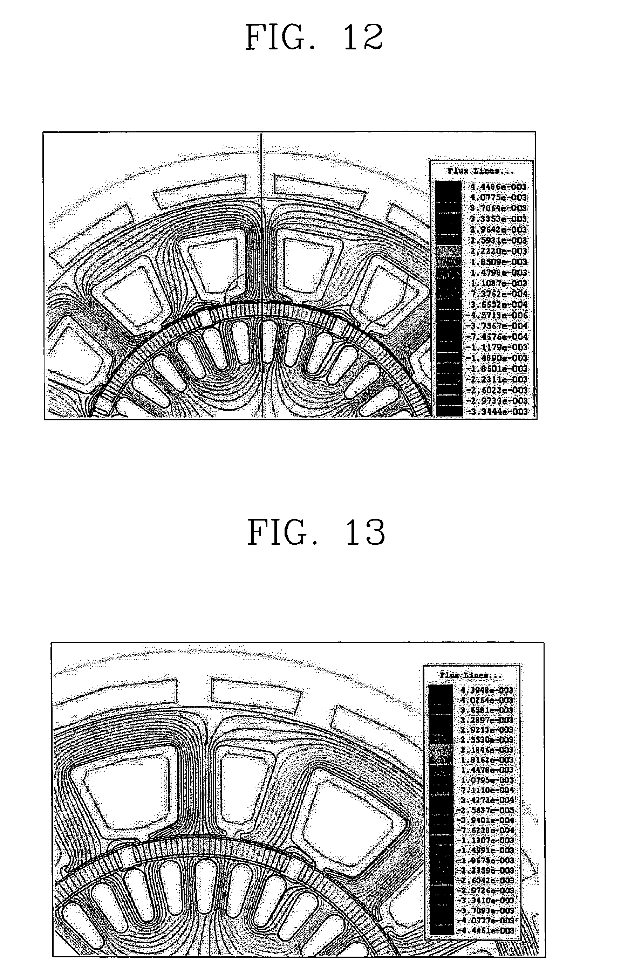

In addition, Fig. 12 illustrates magnetic characteristics in a state in, which the main slot 513 and the sub slot 514 of the stator core 510 have the same size as each other and the volume of the main winding coil 520 wound in the main slot 513 is the same as that of the sub winding coil 530 wound in the sub slot 514. Fig. 13 illustrates magnetic characteristics in a state in which the main slot 513 and the sub slot 514 of the stator core 510 have different sizes from each other and the volume of the main winding coil 520 positioned in the main slot 513 is greater than that of the sub winding coil 530 positioned in the sub slot 514.

As illustrated in the drawings, when the volume of the main winding coil 520 is greater than that of the sub winding coil 530, deterioration of the magnetic characteristics does not occur.

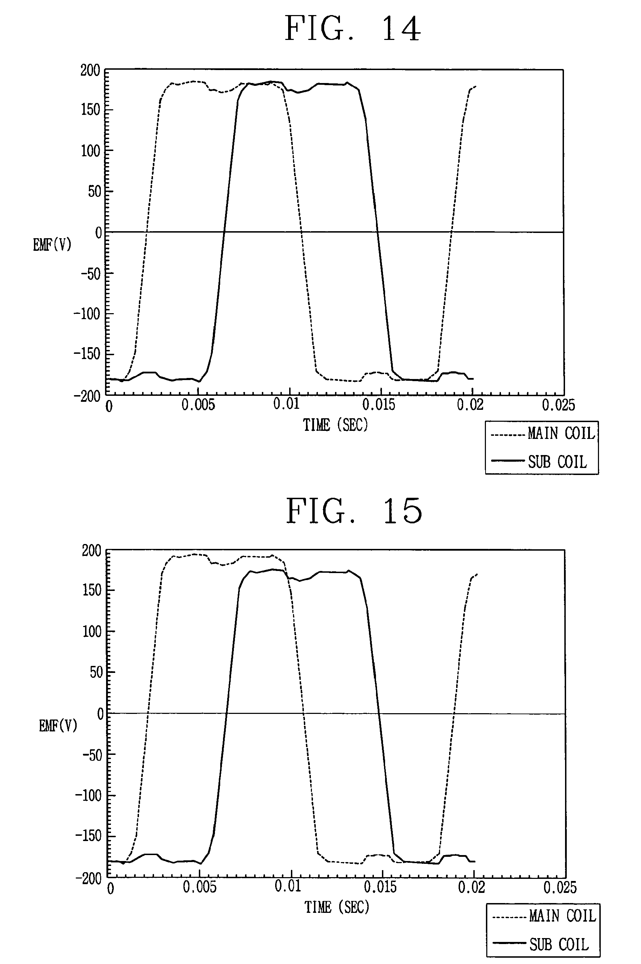

Furthermore, Fig. 14 is a graph illustrating a counter electromotive force in a state in which the main slot 513 and the sub slot 514 of the stator core 510 have the same size as each other and the volume of the main winding coil 520 wound in the main slot 513 is the same as that of the sub winding coil 530 wound in the sub slot 514. Fig. 15 is a graph illustrating a counter electromotive force in a state in which the main slot 513 and the sub slot 514 of the stator core 510 have different sizes from each other and the volume of the main winding coil 520 positioned in the main slot 513 is greater than that of the sub winding coil 530 positioned in the sub slot 514.

As illustrated in the drawings, when the volume of the main winding coil 520 is greater than that of the sub winding coil 530, the counter electromotive force is increased and the resistance is decreased. As the size of the main slot 513 is different from that of the sub winding coil 514, in spite of an unequal interval between the teeths 512, the flux applied to the stator core including the teeths is electrically balanced. Accordingly, it can be seen in the graphs that the main winding coil 520 and the sub winding coil 530 have the same phase difference of 90°.

Upon coupling the air conditioner fan 930 to the rotation shaft 810, an air flow is generated by the rotation of the air conditioner fan 930. In particular, when the induction motor and the fan 930 are mounted in the air conditioner, cool air generated in the air conditioner can flow.

As described above, in the induction motor according to the present invention, the counter electromotive force of the main winding coils is increased and the resistance thereof is decreased, and thus an operation efficiency of the motor can be improved. Also, starting voltage and break down voltage are decreased, and thus the performance and reliability of the induction motor can be improved.

In addition, the counter electromotive force of the main winding coils can be increased and the rotation speed of the primary rotor can be varied, so as to increase an output transferred through the rotation shaft and to vary the rotation speed of the fan. Accordingly, the cool air can be circulated by varying the rotation speed of the fan according to a load of the air conditioner.

## Claims

1. An induction motor comprising:
a stator including main winding coils and sub winding coils wound in a stator core, respectively, the main winding coil having a volume greater than that of the sub winding coil;
a primary rotor rotatably inserted in the stator; and
a secondary rotor rotatably inserted in an air gap between the stator and the primary rotor.

2. The induction motor of claim 1, wherein the main winding coils and the sub winding coils are formed such that coils are wound on inner and outer lateral surfaces of the stator core, and a wound direction of the main and sub winding coils is positioned toward radial direction of the stator core.

3. The induction motor of claim 1 or 2, wherein the number of turns of winding of the main winding coil is greater than that of the sub winding coil.

4. The induction motor of claim 1, 2, or 3, wherein a coil diameter of the main winding coil is greater than that of the sub winding coil.

5. The induction motor of any of claims 1 to 4, wherein a size of each main slot of the stator core in which each main winding coil is positioned are different from a size of each sub slot of the stator core in which each sub winding coil is positioned.

6. The induction motor of claim 5, wherein the main slots and the sub slots of the stator core are alternately positioned with each other.

7. The induction motor of claim 5 or 6, wherein the main slot has a size greater than that of the sub slot.

8. The induction motor of claim 5, 6, or 7, wherein inner walls of the main slot and the sub slot of the stator core have curved surfaces.

9. The induction motor of claim 8, wherein a radius of curvature of the inner wall of the slot of the stator core is the same as a radius of curvature of an outer circumferential surface of the stator core.

10. The induction motor of any of claims 1 to 9, wherein the stator core includes a yoke portion formed in an annular shape with a particular width, and a plurality of teeths formed at an inner circumferential surface of the yoke portion and extending toward the center of the yoke portion to have a particular length, the teeths have the same shape, and the slots formed between the teeth and the teeth have different sizes from the adjacent slots thereof.

11. The induction motor of any of claims 1 to 10, wherein the primary rotor includes:
a hollow cylindrical magnet;
a holder to support the hollow cylindrical magnet; and
a bearing coupled to the holder.

12. The induction motor of any of claims 1 to 11, wherein an air conditioner fan mounted in an air conditioner is coupled to a rotation shaft constructing the primary rotor, and the induction motor to which the air conditioner fan is coupled is mounted in the air conditioner.

13. An induction motor comprising:
a stator including main winding coils and sub winding coils wound in a stator core, respectively, the main winding coil having a volume greater than that of the sub winding coil;
a primary rotor rotatably inserted in the stator; and
a secondary rotor including two hollow cylindrical type magnets, two holders to support the hollow cylindrical type magnets, respectively, and bearings coupled to the holders, respectively.

14. An induction motor comprising:
a stator including a stator core in which slots in which main winding coils are positioned are greater than slots in which sub winding coils are positioned;
a primary rotor rotatably inserted in the stator; and
a secondary rotor including a magnet and rotatably inserted in an air gap between the stator and the primary rotor.

15. The induction motor of claim 14, wherein the main winding coils and the sub winding coils are wound so as to wrap inner walls of the slots of the stator core and an outer circumferential surface of the stator core.
